# EUROPÄISCHE PATENTANMELDUNG

(11) **EP 0 994 560 A1**
(43) Veröffentlichungstag der Anmeldung: **19.04.2000**
(21) Anmeldenummer: 98811034.2
(22) Anmeldetag: 16.10.1998
(51) Int. Cl.: H02P 5/50, A47B 9/00, E05F 15/10

(54) **Verfahren und Vorrichtung zur synchronen Verstellung von Verstellelementen, insbesondere Tischbeinen**

(71) Anmelder: Appel, Klaus, 35452 Heuchelheim (DE)
(72) Erfinder: Appel, Klaus, 35452 Heuchelheim (DE)
(74) Vertreter: Riederer, Conrad A., Dr.

(57) **Zusammenfassung**

Bei einer Mehrzahl von Verstellelementen (35,37,41) werden die einzelnen Antriebe (11) durch je eine individuelle Motorelektronik (13) reguliert. Bei einer Verstellung vergleicht die Motorelektronik (13) einen Sollwert mit dem gemessenen Istwert und korrigiert die Verstellgeschwindigkeit entsprechend. Die Motorelektronik (13) wird durch eine zentrale Steuerelektronik (19) individuell oder gruppenweise angesteuert.

## Beschreibung

### Technisches Gebiet der Erfindung

Die Erfindung betrifft ein Verfahren zur Regelung einer Mehrzahl von Gleichstrommotoren zur synchronen Verstellung von Verstellelementen, z.B. teleskopischen Tischbeinen, bei welchem zur Regelung des Gleichlaufs der Motoren die an den Motor angesetzte elektrische Betriebsspannung geregelt wird.

Die Erfindung betrifft weiter eine Ausrüstung zur synchronen Verstellung von teleskopischen Verstellelementen, insbesondere zur Längenverstellung von Tischbeinen, mit je Verstellelement einem Gleichstrommotor am einen Teleskopteil zum Drehen einer Spindel in einer Stellmutter am anderen Teleskopteil, mit einer Regelung der Betriebsspannung des Motors zur Beeinflussung der Drehgeschwindigkeit des Motors und mit einer Regelung des Synchronlaufs der Gleichstrommotoren.

### Stand der Technik

Die auf dem Markt vorliegenden Lösungen zur motorischen Höhenverstellung von Tischen sind in zwei Kategorien einteilbar:

### 1. Kategorie:

Von einem zentralen Motor aus erfolgt die Kraftübertragung auf eine Mehrzahl von Tischbeinen mechanisch. Erweiterungen sind in begrenztem Rahmen durch mechanische Kopplung möglich.

Der Motor wird durch Bedientasten, welche die Spannung schalten, gesteuert. Die Endlageerkennung erfolgt über Endschalter, welche den Stromfluss bei Erreichen der Endstellung unterbrechen. Die Verstellgeschwindigkeit ist belastungsabhängig.

Alternativ erfolgt die Ansteuerung des Motors durch eine zentrale Bedien- und Steuerelektronik. Mit Sensorelementen wird die Tischlage erkannt. Die Steuerelektronik wertet die Sensorsignale aus. Daher sind verschiedene Positionen gezielt anfahrbar.

### 2. Kategorie:

Bei jeder Stütze, bzw. bei jedem Tischbein ist ein Motor angeordnet. Die zwei oder vier Motoren sind mit Sensoren ausgerüstet, die zur Lageerkennung und zur Geschwindigkeitsüberwachung dienen. Jeder Tisch weist eine zentrale Steuereinheit auf. Diese erfasst die Sensorsignale und versorgt jeden Motor individuell mit dosierter Energie. Der langsamste Motor dient als Führungsmotor für die anderen. Die schnelleren Motoren werden so lange verzögert, bis der langsamste wieder die gleiche Lage erreicht hat.

Eine Erweiterungsmöglichkeit bezüglich der Motorenanzahl ist nicht bekannt.

Nachteilig an beiden Kategorien von Lösungen ist die mangelnde Flexibilität und Erweiterbarkeit von derart ausgerüsteten Tischanordnungen. Selbst bei einer noch zu entwickelnden Zentraleinheit für eine hohe Anzahl von Motoren würden von dieser zu jedem Motor eine Versorgungsleitung und eine Sensorsignalleitung benötigt. Die bekannten Höhenverstelleinrichtungen für Tische sind zudem sehr teuer.

### Aufgabe der Erfindung

Die Erfindung hat zum Ziel, eine kostengünstige Verstelleinrichtung zu schaffen, welche mit minimalem Aufwand erweiterbar ist. Es soll eine Mehrzahl von Tischen zusammen verstellbar sein. Eine Erweiterung eines Tisches mit einer Zusatztischplatte soll ohne grundlegenden Eingriff in die Verstelleinrichtung möglich sein.

### Beschreibung der Erfindung

Erfindungsgemäss wird die Aufgabe dadurch gelöst, dass bei einem Verfahren der eingangs erwähnten Gattung wenigstens ein Verstellparameter, insbesondere die Drehgeschwindigkeit des Motors, durch je eine individuelle, dem einzelnen Motor zugeordnete Motorelektronik mit einem absoluten Sollwert verglichen wird und bei Abweichung von diesem Sollwert die Motorelektronik die Betriebsspannung des Motors so anpasst, dass der Sollwert nach Möglichkeit erreicht wird.

Die Zuordnung einer individuellen Motorelektronik zu jedem Motor ermöglicht eine disperse Anordnung der Regelelektronik am zu regelnden Motor. Zweckmässigerweise und bevorzugt ist die Motorelektronik direkt beim zugeordneten Motor angeordnet. Dadurch werden gegenüber einem Verfahren mit einer allen Motoren gemeinsamen Regelelektronik eine Vielzahl von Leitungen vermieden. Eine Erweiterung ist daher ohne aufwendige Leitungsverbindungen möglich. Der Gleichlauf ist in der Regel durch den Vergleich zwischen Sollwert und Istwert gesichert.

Vorteilhaft wird zum Verstellen der Stützen von einer zentralen Steuerelektronik eine Verstellvorgabe (z.B. Verstellstrecke, Anzahl Umdrehungen, Beschleunigung, Geschwindigkeit, Verzögerung, Dauer) an die Motorelektronik übermittelt und diese Verstellvorgabe in der Motorelektronik in eine die Stellbewegung des Motors verursachende Spannungssteuerung umgesetzt. Zur Übermittlung der Vorgabe wird eine gemeinsame Sprache, eine Sende- und je eine Empfangseinheit benötigt. Die Übermittlung kann via einen Datenbus, via Radiowellen, Infrarot oder dergleichen geschehen.

Sollwerte wie Drehgeschwindigkeit, Anfahrbeschleunigung, Bremsverzögerung, maximaler Verstellweg, unterer und oberer Referenzpunkt werden vorteilhaft von der zentralen Steuerelektronik an die Motorelektronik übermittelt, in einem Speicher der Motorelektronik gespeichert und nach Bedarf von der Motorelektronik abgerufen.

Damit die Sicherheit des Gleichlaufs auch bei stark unterschiedlicher Lastverteilung gewährleistet ist, gibt die Motorelektronik bei einer nicht korrigierbaren Abweichung des zugeordneten Motors von einem Sollwert, insbesondere der Drehgeschwindigkeit, ein Signal ab und wird dieses Signal von der zentralen Steuerelektronik wahrgenommen. Die Wahrnehmung des Signals löst eine Korrektur der Verstellvorgabe für alle Motoren aus, so dass die neue Verstellvorgabe auch vom die vorige Vorgabe nicht erreichenden Motor erreicht wird. Dank der Verstellvorgabe durch eine Steuerelektronik können auch verschiedenen Gruppen von Motoren unterschiedliche Werte vorgegeben werden.

Vorteilhaft steuert die Steuerelektronik jeden einzelnen Motor individuell an. Dadurch kann jedem Motor ein individueller Sollwert oder verschiedenen Gruppen von Motoren unterschiedliche Sollwerte vorgeben werden. Weiter sind vorteilhaft auch Gruppen von Motoren getrennt mit je einer anderen Adresse ansteuerbar. Dadurch kann auch z.B. eine Schrägstellung einer Tischplatte durch die Steuerelektronik veranlasst werden.

Vorteilhaft werden Sollwerte, Befehle und Signale mit Adressen versehen und z.B. über einen Datenbus allen Motoren zugeleitet. Zweckmässigerweise erkennt die Motorelektronik die für sie bestimmte Information aus den zugeleiteten Daten. Anstelle eines Datenbusses ist auch eine Funk- oder Infrarotverbindung oder ähnliches vorstellbar. Die Informationen können auch über eine Versorgungsleitung weitergeleitet werden.

Ein solches offenes Datenbusnetz kann daher Verzweigungen aufweisen. Dies ermöglicht eine sehr freie Anordnung von Tischen und gleichzeitig eine stark vereinfachte Verdrahtung.

Eine zweckmässige Ausführung benützt ein einziges Leiterpaar als Datenbus und als Versorgungsleitung. Dazu können Daten auf eine Stromversorgungsfrequenz aufmoduliert werden. Vorgezogen wird jedoch, dass der Datentransfer und ein zwischen den Daten übermitteltes Synchronisationsformat mit soviel Energie versehen ist, dass diese Energie zum Betreiben der Motoren ausreicht.

Bei einer Ausrüstung zur synchronen Verstellung von Verstellelementen, insbesondere zur teleskopischen Längenverstellung von Tischbeinen, mit je Verstellelement einem Gleichstrommotor an einem Verstellteil zum Drehen einer Spindel in einer Stellmutter an einem zweiten Verstellteil, mit einer Regelung der Betriebsspannung des Motors zur Beeinflussung der Drehgeschwindigkeit des Motors und mit einer Regelung des Synchronlaufs der Gleichstrommotoren, sind erfindungsgemäss jedem Motor eine separate Motorelektronik zur Regelung der Betriebsspannung und Sensoren zugeordnet. Dabei ist die Motorelektronik derart ausgelegt, dass eine Abweichung der Sensorsignale von einem Sollwerten eine Regulierung der Betriebsspannung verursacht.

Diese Ausrüstung ermöglicht eine Anordnung der den Motor steuernden Elektronik beim Motor. Dadurch werden im Vergleich zu einer Ausrüstung mit zentral angeordneter Elektronik eine grosse Anzahl, die Flexibilität und die Erweiterbarkeit behindernder Leitungen vermieden. Eine erfindungsgemässe Ausrüstung setzt sich aus einer variablen Anzahl von Verstellelementen mit je eine Motorelektronik zusammen, wobei die Anzahl keinen Einfluss auf die Ausgestaltung der Motorelektronik hat. Daher ist die Motorelektronik in einer grossen Anzahl und daher kostengünstig herstellbar.

Vorteilhaft ist eine zentrale Steuerelektronik zur Ansteuerung der Motorelektronik vorgesehen. Dadurch können verschiedene Verstellfunktionen von einer zentralen Stelle aus ausgelöst werden.

Vorteilhaft verfügt die Steuerelektronik und jede Motorelektronik je über eine Sendeeinheit und eine Empfangseinheit, um miteinander kommunizieren können. Zweckmässigerweise ist die Regelung der Betriebsspannung abhängig von elektronisch übermittelten Daten, welche die Motorelektronik von der Steuerelektronik empfängt. Dies ermöglicht eine softwaremässige Steuerung der Motoren, was wiederum der Erweiterbarkeit und der Flexibilität dient.

Vorteilhaft sind die Motorelektronik und die Steuerelektronik derart programmierbar, dass verschiedene Steuerbefehle von der Steuerelektronik abgegeben und von der Motorelektronik unterschieden werden können, insbesondere verschiedene Fahrvektoren oder Fahr-Zielpunkte erkannt werden können. Dabei ist die Motorelektronik vorteilhaft mit einem Überwachungsschaltkreis ausgerüstet, um mittels Sensoren die aktuelle Position und/oder die aktuelle Geschwindigkeit zu überwachen, und um die gemessenen Daten mit der Motorelektronik vorliegenden Sollwerten zu vergleichen.

Die Steuerelektronik kann direkt über Tasten oder mit einem Interface bedient werden. Das Interface ist dabei vorteilhaft drahtlos mit der Steuerelektronik verbunden.

Eine entsprechende Steuerung zur Synchronverstellung von teleskopischen Stützen kann auch in anderen Bereichen, z.B. zur Verstellung von Lüftungsklappen bei Gewächshäusern oder zur Höhenverstellung von Bühnenteilen und in vielen anderen Anwendungsgebieten angewandt werden.

### Kurzbeschrieb der Figuren

Es zeigt:
- Fig. 1: eine schematisch vereinfachte Anordnung von Betriebselementen für eine erfindungsgemässe Höhenverstellung von Tischen,
- Fig. 2: eine Untersicht eines erfindungsgemäss ausgerüsteten Tischs,
- Fig. 3: einen Schnitt durch eine Tischbein des Tisches gemäss Figur 2,
- Fig. 4: eine perspektivische Skizze eines Motors mit Motorelektronik.

### Beschrieb der Ausführungsbeispiele

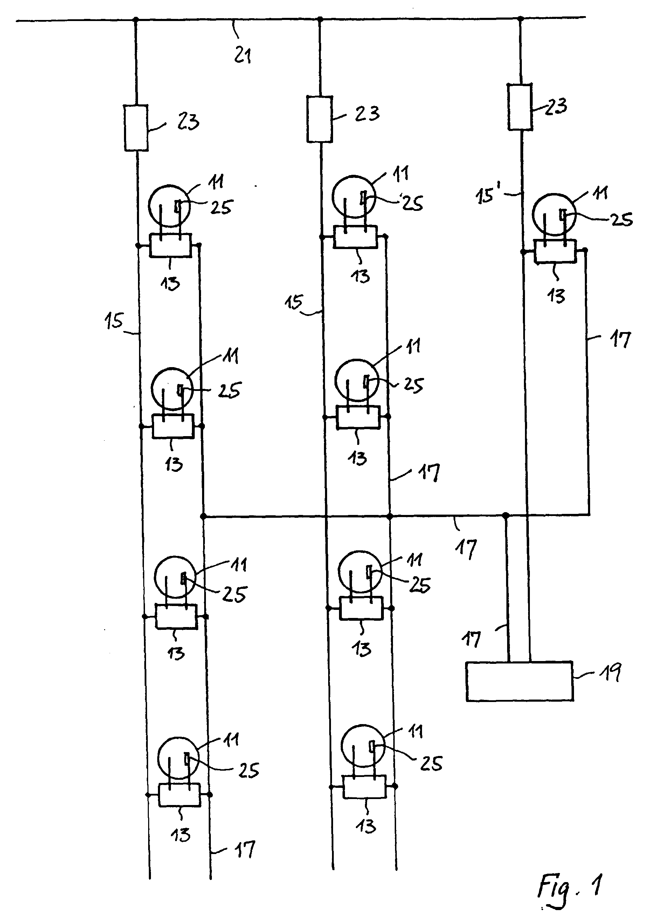

Die Figur 1 zeigt ein schematisches Ausführungsbeispiel einer erfindungsgemässen Ausrüstung zur Verstellung von Tischbeinen. In der Darstellung wird davon ausgegangen, dass jeder Motor 11 ein Tischbein oder eine Doppelabstützung bedient. Jeder Motor 11 ist mit einer individuellen Motorelektronik 13 ausgerüstet. Die Regeleinheiten 13 sind an einen Versorgungsbus 15 oder eine individuelle Versorgungsleitung 15' und einen allen gemeinsamen Datenbus 17 angeschlossen. Ein Bedienelement 19 mit Steuerelektronik ist ebenso an den Datenbus 17 und an die Stromversorgung 15' angeschlossen. Die Stromversorgung 15 und 15' ist eine Gleichstromversorgung. Mit am Starkstromnetz 21 angeschlossenen Netzteilen 23 wird beispielsweise eine Gleichstromversorgung erreicht.

Die Motoren 11 sind mit Sensoren 25 versehen, deren Signale von der jeweiligen Motorelektronik 13 erfasst und verarbeitet werden. Mit den Sensoren 25 (es ist vereinfachend nur ein Sensor je Motor dargestellt) werden die Umdrehungen bzw. die Temperatur des Motors gemessen. Die Relativposition des einen Verstellteils zum andern, im Beispiel entsprechend der Höhe des Tisches, wird aufgrund der Umdrehungen des Motors in der Motorelektronik 13 errechnet. Die Motorelektronik 13 regelt die Drehzahl des Motors mit einer EMK-Regelung durch Veränderung der Betriebsspannung am Motor. Andere Regelungen der Motordrehzahl, z.B. unter Zuhilfenahme der Sensoren und ihrer zeitlichen Impulsvariation, sind durchaus auch zweckmässig.

Bei der Installation der Anlage, ob bei der Erstinstallation oder einer späteren, erneuten Installation, spricht die Steuerelektronik 19 einen Motor nach dem andern mit einer Daten enthaltenden Spannungsmodulation via Datenbus 17 an. Diese antworten jeweils mit einer Stromguittung. Die derart angemeldeten Motoren, bzw. deren Adressen, werden in einem nichtflüchtigen Speicher in der Steuerelektronik 19 gespeichert. Nach dieser Anmeldephase wird die Initialisierungsphase ausgelöst.

In der Initialisierungsphase werden von der Steuerelektronik die Betriebsparameter an die Motorelektronik übermittelt. Diese Betriebsparameter, wie Toleranzen, Anfahrbeschleunigung, Bremsverzögerung, Verfahrgeschwindigkeiten verschiedener Fahrstufen (Stellwertveränderung pro Übermittlungsfrequenz), maximal zulässiger Verstellweg (Differenz zwischen den Referenzpunkten für die kürzeste und die längste Stützenlänge), Referenzpunkte für die kürzeste und die längste Stützenlänge, werden in nichtflüchtigen Speichern der Motorelektronik abgespeichert. Nach jedem empfangenen Programmierbefehl sendet die Motorelektronik eine Stromquittung.

Anschliessend an diese Programmierung der Motorelektronik mit den Betriebsparametern werden die Referenzpunkte definiert. Dies geschieht durch den Befehl, die Motoren bis an den mechanischen Anschlag der Stützen (kürzest mögliche Stützenlänge) zu verfahren. Die Motorelektronik verfährt auf den Befehl hin den Motor mit konstanter Geschwindigkeit oder konstantem Drehmoment bis zum mechanischen Anschlag. Der Anschlag wird durch eine Transientenänderung der erfassten Sensorimpulse der Hallsensoren bis zum Stillstand erfasst. Dann wird der Wegzählerspeicher der Elektronik jeden Motors auf Null gestellt bzw. normiert. Anschliessend verfährt der Motor mit konstanter Geschwindigkeit um eine bestimmte Strecke (einen Zählerwert) vom mechanischen Anschlag weg bis zum Referenzpunkt. Dies wird durch die Programmierung der Motorelektronik veranlasst.

Jeweils nach Einschalten der Verstelleinrichtung überprüft die Steuerelektronik 19 mit einer ersten Anfrage die Präsenz der Motoren. Jeder Motor wird einzeln mit einer adressierten Datenübertragung angesprochen. Dieses Ansprechen wird von der Motorelektronik mit einer Stromquittung via Datenbus beantwortet. Die Abwesenheit eines Motors wird durch Fehlen eines Antwortsignals der entsprechenden Motorelektronik festgestellt. Das Fehlen einer Antwort löst einen Störungsmodus aus. Quittieren hingegen alle Motoren, ist die Anlage betriebsbereit.

Will ein Tisch bzw. eine zusammenhängende Tischkombination in der Höhe verstellt werden, wird eine Taste am Bedienelement 19 betätigt. Über die Tastatur werden Richtung und Fahrgeschwindigkeit (z.B. durch Tastenwahl und Tastendruckdauer) vorgegeben.

Darauf fragt die Steuerelektronik 19 mit spannungsgesteuerter Datenübertragung via Datenbus 17 die einzelnen Motoren 11 ab. Diese zweite Abfrage überprüft die Motorbetriebsbereitschaft. Die Motorelektronik wird durch die Abfrage veranlasst die Motortemperatur zu überprüfen. Eine allfällige Motorüberhitzung wird von der Motorelektronik mit einem Signal (einer Stromquittung) via Datenbus gemeldet. Eine Stromquittung auf die Anfrage der Motorbetriebsbereitschaft veranlasst, dass dieselbe Abfrage wiederholt wird, bis keine Stromquittung mehr übermittelt wird, d.h. der überhitzte Motor abgekühlt ist.

Die zentral angeordnete Steuerelektronik übermittelt danach via zweipoligen Datenbus die Richtung und die Fahrstufe (d.h. dank in konstantem zeitlichem Abstand übertragener Vektorveränderung die Sollgeschwindigkeit) an die dispers angeordnete Motorelektronik. Diese Information wird zur Datensicherheit beispielsweise dreimal übermittelt. Das Datenformat weist eine Motoradresse (individuell für jeden einzelnen oder generell für alle gemeinsam, optional auch für Gruppen von Motoren), die Fahrstufe und die Richtung und zum Schluss ein Prüfbyte auf.

Mit Abstand von 50 Millisekunden übermittelt danach die Steuerelektronik eine vorläufige Absolutposition nach der anderen, welche die Motoren jeweils erreichen sollten. Diese Sollwertvorgabe wird durch Variation der an den Motor angelegten Betriebsspannung durch die Motorelektronik angestrebt. Sobald die Absolutposition der Sollwertvorgabe ausserhalb eines in der Motorelektronik festgelegten Toleranzfensters des Motors liegt wird der Motor von der Motorelektronik mit einer Beschleunigungsrampe angefahren. Eine Überschreitung oder Unterschreitung der Vorgabe wird durch entsprechende Änderung der Betriebsspannung von der Motorelektronik korrigiert. Diese Korrektur erfolgt nach einem Algorithmus. Sollte eine Abweichung vom Sollwert die Toleranzgrenze, bis zu welcher die Motor- und Versorgungsressourcen eine Korrektur erlauben, übersteigen, so gibt die Motorelektronik eine Stromquittung als Signal an die Steuerelektronik ab. Ob die Korrektur möglich ist oder nicht wird von der Motorelektronik jeweils errechnet. Das Signal veranlasst die Steuerelektronik die Sollwertvorgabe anzupassen.

Die Steuerelektronik 19 übermittelt als Sollwert einen absoluten Stellwert, welcher einen Abstand zu einem Referenzpunkt definiert. Nach 50 Millisekunden übermittelt sie einen um einen bestimmten Betrag erhöhten (oder erniedrigten) Stellwert. Nach weiteren 50 Millisekunden einen nochmals um den gleichen Betrag veränderten Stellwert, und so weiter. Die Betragshöhe der jeweiligen Veränderung des Stellwerts wird durch die Programmierung der Fahrstufen definiert. Der Betrag kann auch zunehmend oder abnehmend sein, was eine Beschleunigung oder Verzögerung der Fahrgeschwindigkeit bewirkt. Die Motorelektronik zählt während dem Drehen des Motors die Sensorimpulse und vergleicht den Zählerstand mit der Sollvorgabe. Nähert sich der Zählerwert der letzen Vorgabe oder dem Referenzpunkt, wird der Motorlauf mit einer Bremsrampe zum Stillstand verzögert.

Während der Verstellphase vergleicht die Motorelektronik laufend Ist- und Sollwert. Sollte der Vergleich von Sollwert und Zählerwert ergeben, dass die Istposition ausserhalb der Toleranzen neben der Sollposition liegt, sendet die Motorelektronik eine Stromquittung. Durch Eintreffen einer Stromquittung während der Verstellung wird die Steuerelektronik veranlasst, die jeweilige Erhöhung (Verringerung) des Stellwertes zu korrigieren oder bei der nächsten Übermittlung sogar eine Erhöhung des Stellwertes zu unterlassen bzw. den zeitlichen Abstand zwischen den Sollwertübermittlungen zu strecken. Zur Korrektur des Stellwertes werden die Fahrrichtung und die Fahrstufe neu definiert. Zur Überspringung einer Stellwerterhöhung (-verringerung) um den durch die abgespeicherte Fahrstufe vorgegebenen Betrag wird ein Befehlsintervall von z.B. 50 Millisekunden übersprungen, so dass der nächste Befehl nach 100 (allenfalls 150, 200...) Millisekunden erfolgt. Der zuletzt abgegebene Befehl gilt daher solange, bis das Ausbleiben von Signalen der Motorelektronik anzeigt, dass alle Motoren den vorgegebenen Stellwert innerhalb eines Toleranzfensters erreicht haben.

Durch eine solche Verzögerung der Verstellgeschwindigkeit geraten die anderen, z.B. weniger belasteten Motoren über den zu erreichenden Sollwert hinaus. Die Motorelektronik des zu raschen Motors reduziert darauf dessen Betriebsspannung. Derart pendelt sich ein Gleichlauf der stärker und weniger stark belasteten Motoren ein.

Bei Betätigung der Verstelleinrichtung, überprüft die Steuerelektronik die Motorenbereitschaft, bevor sie einen Fahrbefehl abgibt. Dazu wird die Motorelektronik abgefragt, ob der Motor überhitzt sei. Während der Verstellphase werden die Motoren in regelmässigen Abständen auf Ihre Betriebsbereitschaft (Temperatur) abgefragt. Während der Verstellphase werden laufend Ist- und Sollposition gespeichert, so dass bei einem Leitungsbruch jeweils die aktuellen Positionsdaten im Speicher vorliegen.

Bei Betriebsende (Power Off) registriert die Steuerelektronik Unterspannung und sendet in der Folge den Befehl zur Datensicherung. In der Steuerelektronik wird die aktuelle Sollposition gespeichert. Die Motorelektronik speichert die aktuelle Istposition des Motors (Zählerwert), welche von der Sollposition abweichen kann.

Zur Datenübermittlung kann anstelle von Stromimpulsen und Spannungsmodulation auf dem Datenbus auch eine drahtlose Übermittlung z.B. mit unterschiedlichen Radiowellen- oder Infrarotwellenlängen benutzt werden. Aus Kostengründen wird derzeit eine Lösung mit Leitern vorgezogen. Diese sind denn auch sehr einfach installierbar, da der Datenbus beliebig verzweigt sein kann und auch geschlossene Kreise aufweisen kann. Jede Motorelektronik benötigt lediglich irgend eine Verbindung zum Datenbus.

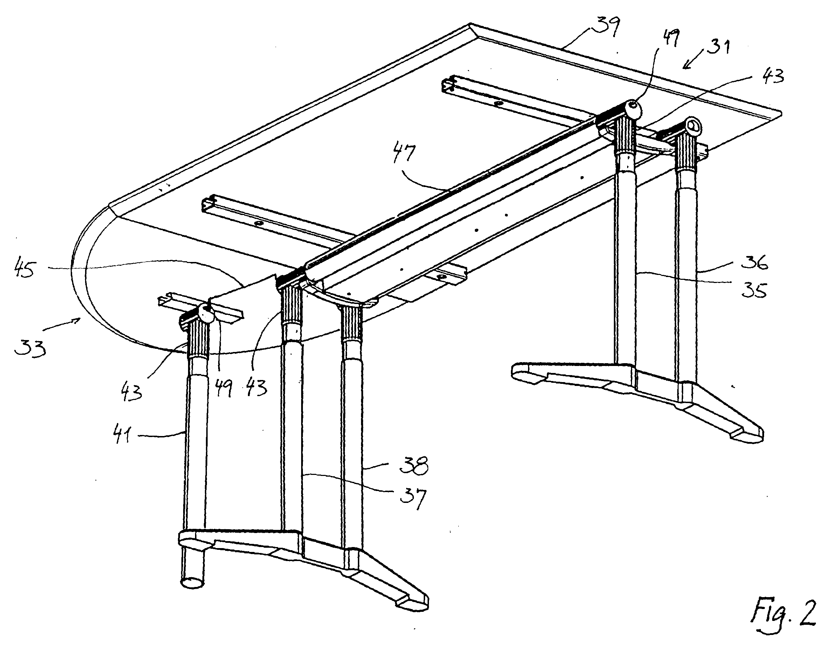

Der in Figur 2 dargestellte Tisch 31 mit Ansatzplatte 33 weist fünf zwei Doppelstützen 35,36 und 37,38 für die Hauptplatte 39 und eine Einzelstütze 41 für die Ansatzplatte 33 auf. Im Kopfteil 43 der Stützen 35,37 und 41 sind je eine Motor mit einer Motorelektronik untergebracht. Diese sind durch einen Datenbus und einen Versorgungsbus miteinander verbunden. Datenbus und Versorgungsbus sind zu einem vierpoligen Kabel 45 zusammengefasst. Dieses ist grösstenteils innerhalb des Tischgestells 47 verlegt lediglich zwischen zwei benachbarten Tischbeinen 37,41 unterschiedlicher Tische 31,33 besteht eine sichtbare Verbindung. An den Tischbeinen ist vorzugsweise eine Steckdose 49 vorgesehen. In diese Steckdosen können vierpolige Verbindungskabel eingesteckt werden.

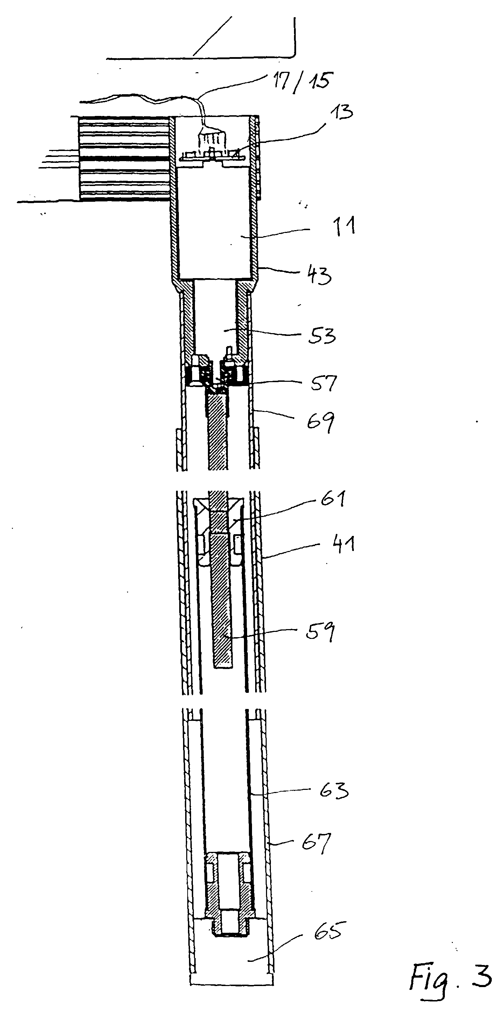

In Figur 3 wird das Kopfstück 43 und das Tischbein 41 mit dem Verstellmechanismus in einem Längsschnitt gezeigt. Das Kopfstück 43 ist eine Gussstück und nimmt den Motor 11 mit Getriebe 53 und Motorelektronik 13 auf. Die Antriebsachse 57 des Motors 11 bzw. des Getriebes 53 ist mit einer Verstellspindel 59 gekoppelt. Diese dreht in einer Stellmutter 61, welche durch die Drehung der Spindel 59 an dieser hinauf oder hinunter verfahren wird. Die Mutter 61 ist fest in einer Stütze 63 angeordnet. Die Stütze trägt die Last des Tisches auf den Tischbeinfuss 65 ab. Das sichtbare äussere Tischbein 41 besteht indes aus zwei Rohren. Das äussere Rohr 67 umfasst das innere Rohr 69. Die beiden Rohre sind ineinander teleskopisch verschiebbar und gewährleisten die notwendige Stabilität des Tischbeins.

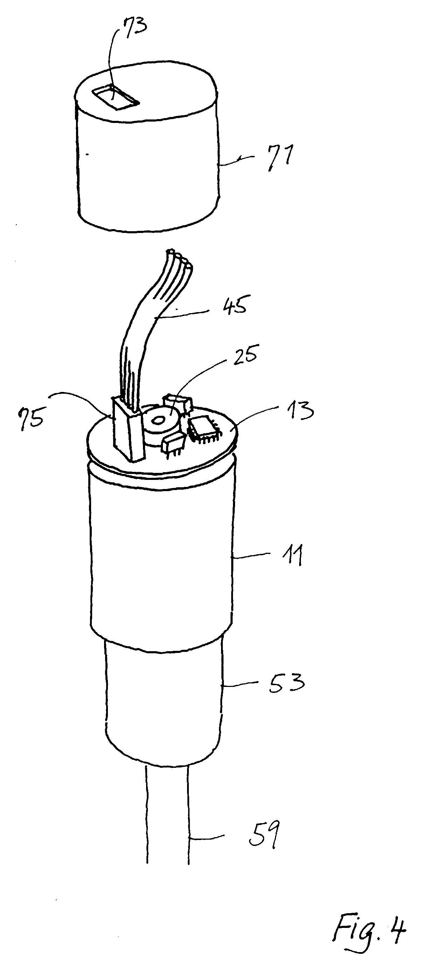

Der Motor 11 ist in Figur 4 in einer perspektivische Skizze dargestellt. Dabei ist ersichtlich, dass die Elektronik 13 auf einer kreisrunden, dem Motorquerschnitt entsprechenden Platine angeordnet ist. Die Platine ist senkrecht zur Motorachse angeordnet und weist in der Mitte einen Sensor 25 zur Erfassung der Motorumdrehungen auf, in welchem die verlängerte Achse des Motors dreht. Diese Anordnung ist sehr platzsparend. Auf der Platine sind die notwendigen Chip angeordnet und ist ein Steckkontakt ausgebildet, in welchen die Verbindungsleitung 45 einsteckbar ist. Die Verbindungsleitung umfasst den Datenbus und den Versorgungsbus. Die Motorelektronik 13 ist mit einer Schutzkappe 71 abdeckbar. Die Schutzkappe 71 weist eine Öffnung 73 zum durchstossen des Steckers 75 der Verbindungsleitung 45 auf.

## Patentansprüche

1. Verfahren zur Regelung einer Mehrzahl von Gleichstrommotoren (11) für die gleichmässige Längenverstellung von mehreren Verstellelementen, insbesondere Tischbeinen (35,37,41), bei welchem zur Regelung des Gleichlaufs der Motoren (11) die an den Motor angesetzte elektrische Betriebsspannung geregelt wird, dadurch gekennzeichnet, dass in je einer dem einzelnen Motor (11) zugeordneten Motorelektronik (13) wenigstens einer der Verstellparameter (z.B. Beschleunigung, Geschwindigkeit, Dauer, Position) mit einem Sollwert verglichen wird und bei Abweichung von diesem Sollwert die Motorelektronik (13) die Betriebsspannung des Motors (11) so anpasst, dass der Sollwert nach Möglichkeit erreicht wird.

2. Verfahren nach Anspruch 1, dadurch gekennzeichnet, dass zum Verstellen der Verstellelemente (35,37,41) von einer zentralen Steuerelektronik (19) eine Verstellvorgabe (z.B. Richtung, Geschwindigkeit, Dauer, Verstellstrecke, Anzahl Umdrehungen, Beschleunigung, Verzögerung) an die Motorelektronik (13) übermittelt wird und diese Verstellvorgabe in der Motorelektronik (13) in eine die Stellbewegung des Motors (11) verursachende Spannungssteuerung umgesetzt wird.

3. Verfahren nach Anspruch 2, dadurch gekennzeichnet, dass Norm-Sollwerte (z.B. normale Drehgeschwindigkeit, Anfahrbeschleunigung, Bremsverzögerung, maximaler Verstellweg, Referenzpunkte für kürzeste und längste Stützenlänge) von der zentralen Steuerelektronik (19) an die Motorelektronik (13) übermittelt, in einem vorzugsweise nicht-flüchtigen Speicher der Motorelektronik (13) gespeichert und nach Bedarf von der Motorelektronik (13) abgerufen werden.

4. Verfahren nach Anspruch 2 oder 3, dadurch gekennzeichnet, dass bei einer durch die Motorelektronik (13) nicht korrigierbaren Abweichung eines Motors (11) von einer Verstellvorgabe, insbesondere der Drehgeschwindigkeit, die diesem zugeordnete Motorelektronik (13) ein Signal abgibt, dieses Signal von der zentralen Steuerelektronik (19) wahrgenommen wird und diese veranlasst, die Verstellvorgabe für alle Motoren (11) zu korrigieren, insbesondere bis zum Erreichen der Vorgabe konstant zu halten.

5. Verfahren nach einem der Ansprüche 1 bis 4, dadurch gekennzeichnet, dass eine zentrale Steuerelektronik (19) die Motorelektronik (13) für jeden Motor (11) individuell und/oder gruppenweise ansteuert.

6. Verfahren nach einem der Ansprüche 1 bis 5 dadurch gekennzeichnet, dass Sollwerte, Befehle und Signale mit Adressen versehen und z.B. über einen Datenbus allen Motoren (11) zugeleitet werden, und dass die Motorelektronik (13) die für sie bestimmte Information aus den zugeleiteten Daten erkennt.

7. Verfahren nach Anspruch 4 und 6, dadurch gekennzeichnet, dass die Motorelektronik (13) und die Steuerelektronik (19) unterschiedlich senden bzw. empfangen, beispielsweise wenn ein Datenbus (17) als Verbindung zwischen Motor- (13) und Steuerelektronik (19) dient, eine, insbesondere die Motorelektronik (13), durch Modulation der Stromstärke Signale sendet und die andere durch Modulation der Spannung.

8. Verfahren nach einem der Ansprüche 2 bis 7, dadurch gekennzeichnet, dass die übermittelten Daten und ein zwischen den Daten übermitteltes Synchronisationsformat mit ausreichender Energie zum Betreiben der Motoren (11) versehen ist.

9. Ausrüstung zur synchronen Verstellung von Verstellelementen (35,37,41), insbesondere zur teleskopischen Längenverstellung von Tischbeinen (35,37,41), mit je Verstellelement einem Gleichstrommotor (11) an einem Verstellteil (43,69) zum Drehen einer Spindel (59) in einer Stellmutter (61) an einem zweiten Verstellteil (63,65,67), mit einer Regelung der Betriebsspannung des Motors (11) zur Beeinflussung der Drehgeschwindigkeit des Motors (11) und mit einer Regelung des Synchronlaufs der Gleichstrommotoren (11), dadurch gekennzeichnet, dass jedem Motor (11) eine separate Motorelektronik (13) zur Regelung der Betriebsspannung und Sensoren (25) zugeordnet sind, wobei die Motorelektronik (13) derart ausgelegt ist, dass eine Abweichung der Sensorsignale von einem Sollwerten eine Regulierung der Betriebsspannung verursacht.

10. Ausrüstung nach Anspruch 9, dadurch gekennzeichnet, dass eine zentrale Steuerelektronik (19) zur Ansteuerung der Motorelektronik (13) vorgesehen ist.

11. Ausrüstung nach Anspruch 10, dadurch gekennzeichnet, dass die Steuerelektronik (19) und jede Motorelektronik (13) je über eine Sendeeinheit und eine Empfangseinheit verfügt, um miteinander kommunizieren können, und die Regelung der Betriebsspannung abhängig ist von elektronisch übermittelten Daten, welche die Motorelektronik (13) von der Steuerelektronik (19) empfängt.

12. Ausrüstung nach einem der Ansprüche 9 bis 11, dadurch gekennzeichnet, dass die Motorelektronik (13) und die Steuerelektronik (19) derart programmierbar sind, dass verschiedene Steuerbefehle von der Steuerelektronik (19) abgegeben und von der Motorelektronik (13) unterschieden werden können, insbesondere verschiedene Fahrvektoren oder Fahr-Zielpunkte erkannt werden können, dass die Motorelektronik (13) mit einem Überwachungsschaltkreis ausgerüstet ist, um mittels Sensoren (25) die aktuelle Position und/oder die aktuelle Geschwindigkeit zu überwachen, und um die gemessenen Daten mit der Motorelektronik (13) vorliegenden Sollwerten zu vergleichen.
